# EUROPÄISCHE PATENTSCHRIFT

(11) **EP 1 453 711 B1**
(45) Veröffentlichungstag und Bekanntmachung des Hinweises auf die Patenterteilung: **30.09.2009**
(21) Anmeldenummer: 02803782.8
(22) Anmeldetag: 20.11.2002
(51) Int. Cl.: B60T 8/00

(54) **VERFAHREN ZUR VERBESSERUNG DES REGELVERHALTENS EINES KRAFTFAHRZEUGS MIT BLOCKIERSCHUTZREGELUNG**
METHOD FOR IMPROVING THE CONTROL BEHAVIOUR OF A MOTOR VEHICLE COMPRISING ANTI-LOCK BRAKING CONTROL
PROCEDE PERMETTANT D'AMELIORER LE COMPORTEMENT DE LA REGULATION D'UN VEHICULE A MOTEUR DOTE D'UN SYSTEME ANTIBLOCAGE

(30) Priorität: 26.11.2001 DE 10157629; 09.10.2002 DE 10247082
(43) Veröffentlichungstag der Anmeldung: 08.09.2004
(73) Patentinhaber: Continental Teves & Co. oHG, 60488 Frankfurt am Main (DE)
(72) Erfinder: FENNEL, Helmut, 65812 Bad Soden (DE); BATISTIC, Ivica, 60385 Frankfurt/M. (DE)
(86) Internationale Anmeldenummer: PCT/EP2002/012999
(87) Internationale Veröffentlichungsnummer: WO 2003/045752

(56) Entgegenhaltungen:
- EP-A- 0 235 515
- EP-A- 0 443 066
- DE-A- 4 114 345
- DE-A- 10 006 012
- DE-A- 19 530 902
- DE-A- 19 955 094
- US-A- 5 492 396

## Beschreibung

Die Erfindung betrifft ein Verfahren zur Verbesserung des Regelverhaltens eines Kraftfahrzeugs mit Blockierschutzregelung, insbesondere zur Verbesserung der Bremsleistung bei Bremsvorgängen auf homogenem Untergrund, bei dem auf Räder und Reifen wirkende Kräfte bzw. Drücke von Sensoren ermittelt und als Regelgrößen für ein Kraftfahrzeug-Regelungssystem eingesetzt werden.

In der EP 0 433 066 A1 wird ein Antiblockierregelsystem offenbart, in welchem die an den bremsschlupfregelbaren Fahrzeugrädern wirkenden Bremsmomente, Bremskräfte oder Bremsdrücke erfasst und gespeichert werden, sowie die Bremsdruckmodulatoren von als blockiergefährdet erkannten Rädern nach erfolgter Druckabsenkung wieder so gesteuert werden, dass die an diesen Rädern wirksamen Bremsmomente, Bremskräfte oder Bremsdrücke annährend wieder die Werte annehmen, welche kurz vor dem Erkennen der Blockiergefährdung erfasst und gespeichert wurden.

Ein Antiblockierregelsystem mit einer Giermomentenabschwächung, in welchem bei Kurvenfahrt der Bremsdruck an den Hinterrädern mit dem Auftreten einer Instabilität an dem zuerst Blockierneigung zeigenden Vorderrad konstant gehalten wird, wird in der EP 0 235 515 A2 offenbart.

In der WO 00/51861 ist bereits ein Verfahren zur Ermittlung der Maximal- bzw. Minimalkraft beschrieben. Es ist bekannt, dass das Halten der Räder im Bereich des für die gegebene Fahrbahn maximalen Reibungskoeffizienten µ die höchste Bremsleistung bringt. Das Kraft- bzw. Druckmaximum entspricht dem maximalen Reibungskoeffizienten µ. In der Praxis ist dieser Zustand nicht einzuhalten, denn der Reibungskoeffizient µ kann sich ändern. Eine Änderung zum niedrigeren Reibungskoeffizient hin wird durch eine neue Instabilität angezeigt.

Als nachteilig bei dem bekannten Verfahren wird angesehen, dass eine Änderung zum höheren Reibungskoeffizienten hin nicht erkannt wird.

Es ist daher Aufgabe der vorliegenden Erfindung, ein Verfahren bereitzustellen, welches eine Änderung zu höheren Reibungskoeffizienten hin erkennt.

Diese Aufgabe wird erfindungsgemäß durch das Verfahren gemäß Anspruch 1 gelöst.

Zur Konkretisierung des erfindungsgemäßen Verfahrens werden aus Kraft- oder Druckinformationen beider Vorderräder die maximal übertragbaren Bremskräfte und die minimal übertragbaren Bremskräfte, oder die maximal übertragbaren Bremsdrücke und die minimal übertragbaren Bremsdrücke ermittelt.

Erfindungsgemäß wird die Bremsdruckanpassung durchgeführt, wenn in einem Komparator die Bedingungen:
a) Beide Vorderräder befinden sich auf dem stabilen Ast der µ-Schlupfkurve
b) Fx_{VL} ≥ k_{Fx} · Fx_{VLmax} und
   Fx_{VR} ≥ k_{Fx} · Fx_{VRmax}
c) Fx_{VLmax} ≥ k_{symm} · Fx_{VRmax} und
   Fx_{VRmax} ≥ k_{symm} · Fx_{VLmax}

Fx_{VL}, Fx_{VR}: Bremskräfte
k_{Fx}: Kraftfaktor
Fx_{VRmax}, Fx_{VLmax}: Bremskraftmaxima
k_{symm}: Symmetriefaktor
erfüllt werden, wobei ein Kraftfaktor k_{Fx} bevorzugt im Wertebereich 0,98 < k_{Fx} < 1, und ein Symmetriefaktor k_{symm} bevorzugt im Wertebereich 0,90 < k_{symm} < 1 und ganz besonders bevorzugt im Wertebereich 0,95 < k_{symm} < 1 liegt.

Bei einer weiteren vorteilhaften Variante des erfindungsgemäßen Verfahrens erfolgt der verlangsamte Bremsdruckaufbau entweder gepulst mit langen Pausen, vorzugsweise Pausen größer als 200 ms, oder kontinuierlich mit niedrigem Gradienten, vorzugsweise mit Gradienten kleiner 50 bar/s.

Vorteilhafterweise wird die Bremsdruckanpassung so lang aufrecht erhalten, bis eine der Bedingungen:
d) Fx_{VLmax} < k_{symm} · Fx_{VRmax} oder
   Fx_{VRmax} < k_{symm} · Fx_{VLmax}
a) Fx_{VL} ≥ kr_{Fx} · Fx_{VR} oder
   Fx_{VR} ≥ kr_{Fx} · FX_{VL}

Fx_{VRmax}, Fx_{VLmax}: Bremskraftmaxima
k_{symm}: Symmetriefaktor
Fx_{VL}, Fx_{VR}: Bremskräfte
kr_{Fx}: Toleranzfaktor
erfüllt wird, wobei der Symmetriefaktor k_{symm} bevorzugt im Wertebereich 0,90 < k_{symm} < 1 und ganz besonders bevorzugt im Wertebereich 0,95 < k_{symm} < 1, und ein Toleranzfaktor kr_{Fx} bevorzugt im Wertebereich 1 < kr_{Fx} < 1,1 liegt, und bei Erfüllung der Bedingung d) die Bremsdruckanpassung abgebrochen wird und bei Erfüllung e) die Führung der Bremsdruckanpassung dahingegen geändert wird, dass das Vorderrad welches bisher mit deutlich verlangsamtem Bremsdruckaufbau zusammen mit den Hinterrädern betrieben wurde nun an sein Bremskraftmaximum herangeführt wird, wohingegen das andere Vorderrad nun zusammen mit den Hinterrädern mit dem deutlich verlangsamten Bremsdruckaufbau betrieben wird.

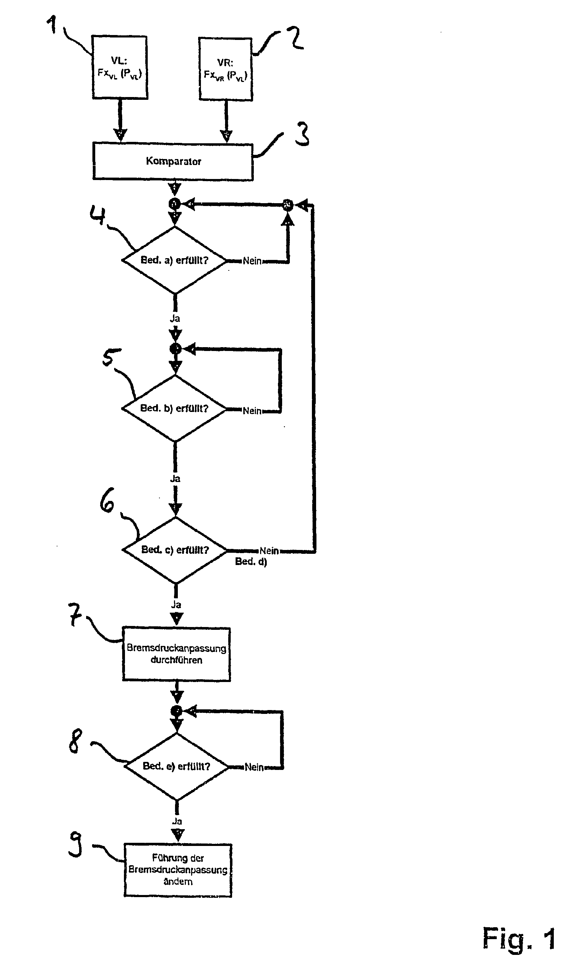

Weitere Einzelheiten, Merkmale und Vorteile des erfindungsgemäßen Verfahrens gehen aus der nachfolgenden Beschreibung anhand der Fig. 1 hervor.

Die Fig. 1 zeigt ein Flussdiagramm/ Ablaufdiagramm einer Bremsdruckanpassung 7 während einer ABS-Bremsung. Die Druck- bzw. Kraftinformationen des linken Vorderrades (VL) 1 und des rechten Vorderrades (VR) 2 werden an einen Komparator 3 übergeben. Im weiteren werden bei der Beschreibung eines vorteilhaften Ausführungsbeispiels des erfindungsgemäßen Verfahrens nur Kraftinformationen betrachtet, da sich die Druckinformationen proportional zu den Kraftinformationen verhalten.
Der Komparator 3 prüft in einem ersten Schritt 4 ob die Bedingung
b) Beide Vorderräder 1, 2 befinden sich in einer stabilen Phase
erfüllt wird, wobei die stabile Phase bedeutet, dass die Vorderräder 1, 2 sich momentan auf dem stabilen Ast der µ-Schlupf-Kurve befinden. Ist dies nicht der Fall, so wird die Bedingung a) solange abgefragt, bis sie erfüllt wird.
Bei Erfüllung der Bedingung a) wird in einem zweiten Schritt 5 auf Erfüllung der Bedingung
b) Fx_{VL} ≥ k_{Fx} · Fx_{VLmax} und
   Fx_{VR} ≥ k_{Fx} · Fx_{VRmax}
geprüft, wobei die Bedingung b) bedeutet, dass sich beide Vorderräder 1, 2 nahe an ihren Bremskraftmaxima (Fx_{VLmax}, Fx_{VRmax}) befinden, wobei ein Kraftfaktor k_{Fx} bevorzugt im Wertebereich 0,98 < k_{Fx} < 1 liegt. Solange die Bedingung b) nicht erfüllt wird, wird der zweite Schritt 5 permanent durchlaufen. Wird die Bedingung 2 erfüllt, wird in einem dritten Schritt 6 geprüft, ob die Bedingung
c) FX_{VLmax} ≥ k_{symm} · Fx_{VRmax} und
   Fx_{VRmax} ≥ k_{symm} · Fx_{VLmax}
erfüllt wird. Bedingung c) bedeutet, dass beide Vorderräder 1, 2 symmetrische Bremskraftmaxima (Fx_{VRmax}, Fx_{VLmax}) aufweisen, wobei die Symmetrie durch einen Symmetriefaktor k_{symm} beschrieben wird, der bevorzugt im Wertebereich 0,90 < k_{symm} < 1 und ganz besonders bevorzugt im Wertebereich 0,95 < k_{symm} < 1 liegt.
Diese Bedingung stellt sicher, dass die ABS-Bremsung unter homogenen Bedingungen abläuft. Eine weitere Überprüfung der querdynamischen Verhältnisse ist überflüssig, denn bei relevantem Einfluss der Querdynamik würde sich durch die Änderung der µ-Schlupf-Kurve als Folge derselben ein deutlich unterschiedliches Kraftmaximum der Vorderräder 1, 2 einstellen. Somit wäre die Bremsdruckanpassung 7 unwirksam.
Wird die Bedingung c) nicht erfüllt, was der Bedingung
d) Fx_{VLmax} < k_{symm} · Fx_{VRmax} oder
   Fx_{VRmax} < k_{symm} · Fx_{VLmax}
entspricht, wobei d) bedeutet, dass bei einer starken Abweichung der Bremskraftmaxima (Fx_{VLmax} , Fx_{VRmax}) beider Vorderräder 1, 2 zueinander, wobei der Symmetriefaktor k_{symm} bevorzugt im Wertebereich 0,90 < k_{symm} < 1 und ganz besonders bevorzugt im Wertebereich 0,95 < k_{symm} < 1 liegt, die Bremsdruckanpassung 7 abgebrochen wird.

Gelten hingegen die Bedingungen a) bis c) wird die besagte Bremsdruckanpassung 7 eingeleitet. Hierbei wird das Vorderrad 1 oder 2 mit der niedrigeren momentan gemessenen Bremskraft (Fx_{VRmax} oder Fx_{VLmax}) an sein Bremskraftmaximum (Fx_{VRmax} oder Fx_{VLmax}) durch einen gestuften oder kontinuierlichen Bremsdruckaufbau herangeführt, wohingegen an dem anderen Vorderrad 1 oder 2 und an den Hinterrädern ein deutlich verlangsamter Bremsdruckaufbau erfolgt. Der verlangsamte Bremsdruckaufbau erfolgt entweder gepulst mit langen Pausen, besonders bevorzugt sind Pausen größer als 200 ms, oder kontinuierlich mit niedrigem Gradienten, besonders bevorzugt sind Gradienten kleiner 50 bar/s.

Gleichzeitig läuft durch das normal aufpulsende Vorderrad 1 oder 2 die Suche entweder nach einem neuen Bremskraftmaximum (Fx_{VRmax} oder Fx_{VLmax}) oder nach Bestätigung des alten Bremskraftmaximum (Fx_{VRmax} oder Fx_{VLmax}).

Die Bremsdruckanpassung 7 wird solange durchgeführt, bis in einem vierten Schritt 8 die Bedingung
e) Fx_{VL} ≥ kr_{Fx} · Fx_{VR} oder
   Fx_{VR} ≥ kr_{Fx} · Fx_{VL}
erfüllt wird, wobei e) bedeutet, dass die aktuell gemessenen Bremskräfte (Fx_{VL}, Fx_{VR}) der Vorderräder 1, 2 um einen Toleranzfaktor kr_{Fx}, der bevorzugt im Bereich 1 < kr_{Fx} < 1,1 liegt, voneinander abweichen. Ist dies der Fall, so wird die Führung 9 der Bremsdruckanpassung 7 dahingegen geändert, dass das Vorderrad 1 oder 2 welches bisher den deutlich verlangsamten Bremsdruckaufbau zusammen mit den Hinterrädern erfuhr nun an sein Bremskraftmaximum (Fx_{VLmax} oder Fx_{VRmax})herangeführt wird, wohingegen das andere Vorderrad 1 oder 2 nun zusammen mit den Hinterrädern den deutlich langsameren Bremsdruckaufbau erfährt. Der Bereich 1 < kr_{Fx} < 1,1 ist hierbei als Hysterese zu verstehen, um nicht permanent zwischen zwei Modi umschalten zu müssen.

Mit diesem Verfahren werden die Vorderräder an das beidseitige Bremskraftmaximum (Fx_{VRmax} oder Fx_{VLmax}) herangeführt, was unter gegebenen Umständen bezüglich Reifen und Fahrbahn, eine optimale Bremsleistung sicherstellt. Weiterhin wird eine möglichst niedrige Regelfrequenz auf einem hohen Bremskraftniveau in der Mehrheit aller Räder erreicht.

## Patentansprüche

1. Verfahren zur Verbesserung des Regelverhaltens eines Kraftfahrzeugs mit Blockierschutzregelung, insbesondere zur Verbesserung der Bremsleistung auf homogenem Untergrund, bei dem auf Räder und Reifen wirkende Kräfte bzw. Drücke von Sensoren ermittelt und als Regelgrößen für ein Kraftfahrzeug-Regelungssystem eingesetzt werden, **dadurch gekennzeichnet, dass** bei Bremsvorgängen auf homogenem Untergrund ein Heranführen der Bremsdrücke (P_{VL}, P_{VR}) oder der Bremskräfte (Fx_{VL}, Fx_{VR}) beider Vorderräder (1, 2) an ihre Bremskraftmaxima (Fx_{VLmax}, Fx_{VRmax}) erfolgt, wobei das Vorderrad (1 oder 2) mit der niedrigeren momentan gemessenen Bremskraft (Fx_{VRmax} oder Fx_{VLmax}) bzw. Bremsdruck (P_{VL} oder P_{VR}) durch einen gezielten Bremsdruckaufbau an sein Bremskraftmaximum (Fx_{VRmax} oder Fx_{VLmax}) herangeführt wird, während das andere Vorderrad (1 oder 2) und die Hinterräder mit einem deutlich verlangsamten Bremsdruckaufbau betrieben werden, und dass die Bremsdruckanpassung (7) durchgeführt wird, wenn in einem Komparator die Bedingungen:
a) Beide Vorderräder befinden sich auf dem stabilen Ast der µ-Schlupfkurve
b) Fx_{VL} ≥ k_{Fx} · Fx_{VLmax} und
Fx_{VR} ≥ k_{Fx} · Fx_{VRmax}
c) Fx_{VLmax} ≥ k_{symm} · Fx_{VRmax} und
Fx_{VRmax} ≥ k_{symm} · Fx_{VLmax}
Fx_{VL}, Fx_{VR}: Bremskräfte
k_{Fx}: Kraftfaktor
Fx_{VRmax}, Fx_{VLmax}: Bremskraftmaxima
k_{symm}: Symmetriefaktor
erfüllt werden, wobei der Kraftfaktor k_{Fx} bevorzugt im Wertebereich 0,98 < k_{Fx} < 1, und der Symmetriefaktor k_{symm} bevorzugt im Wertebereich 0,90 < k_{symm} < 1 und ganz besonders bevorzugt im Wertebereich 0,95 < k_{symm} < 1 liegt.

2. Verfahren nach Anspruch 1, **dadurch gekennzeichnet, dass** aus Kraft- oder Druckinformationen beider Vorderräder (1, 2) die maximal übertragbaren Bremskräfte (Fx_{VLmax}, Fx_{VRmax}) und die minimal übertragbaren Bremskräfte (Fx_{VLmin}, Fx_{VRmin}), oder die maximal übertragbaren Bremsdrücke (P_{VLmax}, P_{VRmax}) und die minimal übertragbaren Bremsdrücke (P_{VLmin}, P_{VRmin}) ermittelt werden.

3. Verfahren nach Anspruch 1 oder 2, **dadurch gekennzeichnet, dass** der verlangsamte Bremsdruckaufbau entweder gepulst mit langen Pausen, vorzugsweise Pausen größer als 200 ms, oder kontinuierlich mit niedrigem Gradienten, vorzugsweise mit Gradienten kleiner 50 bar/s, erfolgt.

4. Verfahren nach Anspruch 1, **dadurch gekennzeichnet, dass** die Bremsdruckanpassung (7) so lang aufrecht erhalten wird, bis eine der Bedingungen:
d) Fx_{VLmax} < k_{symm} · Fx_{VRmax} oder
Fx_{VRmax} < k_{symm} · Fx_{VLmax}
e) Fx_{VL} ≥ kr_{Fx} · Fx_{VR} oder
Fx_{VR} ≥ kr_{Fx} · Fx_{VL}
Fx_{VRmax}, Fx_{VLmax}: Bremskraftmaxima
k_{symm}: Symmetriefaktor
Fx_{VL}, Fx_{VR}: Bremskräfte
kr_{Fx}: Toleranzfaktor
erfüllt wird, wobei der Symmetriefaktor k_{symm} bevorzugt im Wertebereich 0,90 < k_{symm} < 1 und ganz besonders bevorzugt im Wertebereich 0,95 < k_{symm} < 1, und ein Toleranzfaktor kr_{Fx} bevorzugt im Wertebereich 1 < kr_{Fx} < 1,1 liegt, und bei Erfüllung der Bedingung d) die Bremsdruckanpassung (7) abgebrochen wird und bei Erfüllung e) die Führung (9) der Bremsdruckanpassung (7) dahingegen geändert wird, dass das Vorderrad (1 oder 2), welches bisher mit deutlich verlangsamtem Bremsdruckaufbau zusammen mit den Hinterrädern betrieben wurde, nun an sein Bremskraftmaximum (Fx_{VLmax} oder Fx_{VRmax}) herangeführt wird, wohingegen das andere Vorderrad (1 oder 2) nun zusammen mit den Hinterrädern mit dem deutlich verlangsamten Bremsdruckaufbau betrieben wird.

## Claims

1. Method for improving the control behaviour of a motor vehicle comprising anti-lock braking control, in particular for improving braking performance on a homogeneous underlying surface, in which method forces or pressures acting on wheels and tyres are detected by sensors and are used as control variables for a motor vehicle control system, **characterized in that,** during braking procedures on a homogeneous underlying surface, the brake pressures (P_{FL}, P_{FR}) or the brake forces (Fx_{FL}, Fx_{FR}) of the two front wheels (1, 2) are brought up to their brake force maxima (Fx_{FLmax}, Fx_{FRmax}), with the front wheel (1 or 2) with the lower instantaneous measured brake force (Fx_{FRmax} or Fx_{FLmax}) or brake pressure (P_{FL} or P_{FR}) being brought up to its brake force maximum (Fx_{FRmax} or Fx_{FLmax}) by means of a targeted build-up of brake pressure, while the other front wheel (1 or 2) and the rear wheels are operated with a considerably slowed build-up of brake pressure, and **in that** the brake pressure adaptation (7) is carried out if, in a comparator, the following conditions are met:
a) both front wheels lie on the stable branch of the µ slip curve,
b) Fx_{FL} ≥ k_{Fx} · Fx_{FLmax} and
Fx_{FR} ≥ k_{Fx} · Fx_{FRmax}
c) Fx_{FLmax} ≥ k_{symm} · Fx_{FRmax} and
Fx_{FRmax} ≥ k_{symm} · Fx_{FLmax}
Fx_{FL}, Fx_{FR}: brake forces
k_{Fx}: force factor
Fx_{FRmax}, Fx_{FLmax}: brake force maxima
k_{symm}: symmetry factor,
with the force factor k_{Fx} lying preferably in the value range 0.98 < k_{Fx} < 1, and with the symmetry factor k_{symm} lying preferably in the value range 0.90 < k_{symm} < 1 and very particularly preferably in the value range 0.95 < k_{symm} < 1.

2. Method according to Claim 1, **characterized in that** the maximum transmissible brake forces (Fx_{FLmax}, Fx_{FRmax}) and the minimum transmissible brake forces (Fx_{FLmin} Fx_{FRmin}), or the maximum transmissible brake pressures (P_{FLmax}, P_{FRmax}) and the minimum transmissible brake pressures (P_{FLmin}, P_{FRmin}), are determined from force or pressure information from both front wheels (1, 2) .

3. Method according to Claim 1 or 2, **characterized in that** the slowed build-up of brake pressure takes place either in a pulsed fashion with long pauses, preferably pauses of greater than 200 ms, or continuously with shallow gradients, preferably with gradients of less than 50 bar/s.

4. Method according to Claim 1, **characterized in that** the brake pressure adaptation (7) is maintained until one of the following conditions is met:
d) FX_{FLmax} < k_{symm} · FX_{FRmax} or
FX_{FRmax} < k_{symm} · Fx_{FLmax}
e) Fx_{FL} ≥ kr_{Fx} · Fx_{FR} or
Fx_{FR} ≥ kr_{Fx} · Fx_{FL}
Fx_{FRmax}, Fx_{FLmax}: brake force maxima
k_{symm}: symmetry factor
Fx_{FL}, Fx_{FR}: brake forces
kr_{Fx}: tolerance factor,
with the symmetry factor k_{symm} lying preferably in the value range 0.90 < k_{symm} < 1 and very particularly preferably in the value range 0.95 < k_{symm} < 1, and with a tolerance factor kr_{Fx} lying preferably in the value range 1 < kr_{Fx} < 1.1, and wherein if condition d) is met, the brake pressure adaptation (7) is ended, and if condition e) is met, the control (9) of the brake pressure adaptation (7) is altered in such a way that that front wheel (1 or 2) which has hitherto been operated together with the rear wheels with a considerably slowed build-up of brake pressure is now brought up to its brake force maximum (Fx_{FLmax} or Fx_{FRmax}), whereas the other front wheel (1 or 2) is now operated together with the rear wheels with the considerably slowed build-up of brake pressure.

## Revendications

1. Procédé pour améliorer les performances de régulation d'un véhicule automobile muni d'un régulateur antiblocage, notamment pour améliorer la puissance de freinage sur un sol homogène, avec lequel les forces ou les pressions qui agissent sur les roues et les pneumatiques sont déterminées par des capteurs et utilisées en tant que grandeurs de régulation pour un système de régulation pour véhicule automobile, **caractérisé en ce que** lors des opérations de freinage sur un sol homogène, les pressions de freinage (P_{VL}, P_{VR}) ou les forces de freinage (Fx_{VL}, Fx_{VR}) des deux roues avant (1, 2) sont amenées à une valeur proche de leur force de freinage maximale (Fx_{VLmax}, Fx_{VRmax}), la roue avant (1 ou 2) ayant la force de freinage (Fx_{VLmax} ou Fx_{VRmax}) ou la pression de freinage (P_{VL} ou P_{VR}) momentanée mesurée la plus faible étant amenée à sa force de freinage maximale (Fx_{VLmax} ou Fx_{VRmax}) par un établissement ciblé de la force de freinage, alors que l'autre roue avant (1 ou 2) ainsi que les roues arrière fonctionnent avec un établissement nettement ralenti de la pression de freinage, et que l'adaptation de la pression de freinage (7) est effectuée lorsque les conditions suivantes :
a) Les deux roues avant se trouvent sur la branche stable de la courbe de patinage µ
b) Fx_{VL} ≥ k_{Fx} . Fx_{VLmax} et
Fx_{VR} ≥ k_{Fx} . Fx_{VRmax}
c) Fx_{VLmax} ≥ k_{symm} . Fx_{VRmax} et
Fx_{VRmax} ≥ k_{symm} . Fx_{VLmax}
Fx_{VL}, Fx_{VR} : forces de freinage
k_{Fx} : facteur de force
Fx_{VRmax}, Fx_{VLmax} : maximum de la force de freinage
k_{symm} : facteur de symétrie
sont réunies dans un comparateur, le facteur de force k_{Fx} étant de préférence inclus dans la plage de valeurs 0,98 < k_{Fx} < 1 et le facteur de symétrie k_{symm} de préférence dans la plage de valeurs 0,90 < k_{symm} < 1, avec une préférence toute particulière pour la plage de valeurs 0,95 < k_{symm} < 1.

2. Procédé selon la revendication 1, **caractérisé en ce que** les forces de freinage maximales transmissibles (Fx_{VLmax}, Fx_{VRmax}) et les forces de freinage minimales transmissibles (Fx_{VLmin}, Fx_{VRmin}) ou les pressions de freinage maximales transmissibles (P_{VLmax}, P_{VRmax}) et les pressions de freinage minimales transmissibles (P_{VLmin}, P_{VRmin}) sont déterminées à partir des informations de force ou de pression des deux roues avant (1, 2).

3. Procédé selon la revendication 1 ou 2, **caractérisé en ce que** l'établissement ralenti de la pression de freinage s'effectue soit sous forme d'impulsions avec des pauses prolongées, de préférence des pauses supérieures à 200 ms, ou continuellement avec des faibles gradients, de préférence avec des gradients inférieurs à 50 bar/s.

4. Procédé selon la revendication 1, **caractérisé en ce que** l'adaptation de la pression de freinage (7) est maintenue jusqu'à ce que l'une des conditions :
d) Fx_{VLmax} < k_{symm} . Fx_{VRmax} ou
Fx_{VRmax} < k_{symm} . Fx_{VLmax}
e) Fx_{VL} ≥ kr_{Fx} . Fx_{VR} ou
Fx_{VR} ≥ kr_{Fx} . Fx_{VL}
Fx_{VRmax}, Fx_{VLmax} : maximum de la force de freinage
k_{symm} : facteur de symétrie
Fx_{VL}, Fx_{VR} : forces de freinage
kr_{Fx} : facteur de tolérance
est réunie, le facteur de symétrie k_{symm} étant de préférence inclus dans la plage de valeurs 0,90 < k_{symm} < 1, avec une préférence toute particulière pour la plage de valeurs 0,95 < k_{symm} < 1 et un facteur de tolérance kr_{Fx} de préférence dans la plage de valeurs 1 < kr_{Fx} < 1,1, et l'adaptation de la pression de freinage (7) étant interrompue lorsque la condition d) est remplie alors que lorsque la condition e) est remplie, le contrôle (9) de l'adaptation de la pression de freinage (7) est modifié **en ce que** la roue avant (1 ou 2) qui fonctionnait jusqu'à présent avec un établissement nettement ralenti de la pression de freinage conjointement avec les roues arrière, est à présent amenée à une valeur proche de sa force de freinage maximale (Fx_{VLmax} ou Fx_{VRmax}), alors que l'autre roue avant (1 ou 2), par contre, fonctionne à présent avec l'établissement nettement ralenti de la pression de freinage conjointement avec les roues arrière.
